# EUROPÄISCHE PATENTSCHRIFT

(11) **EP 1 990 153 B1**
(45) Veröffentlichungstag und Bekanntmachung des Hinweises auf die Patenterteilung: **16.12.2009**
(21) Anmeldenummer: 07009476.8
(22) Anmeldetag: 11.05.2007
(51) Int. Cl.: B27F 4/00, B27M 3/00, B23P 19/00, F16B 5/01, F16B 13/06

(54) **Vorrichtung und Verfahren zum Einbringen eines Befestigungselements in eine Bohrung in einem Werkstück**
Device and method for introducing a mounting element into the drill hole in a work piece
Procédé et dispositif destinés à l'introduction d'un élément de fixation dans le trou d'une pièce

(43) Veröffentlichungstag der Anmeldung: 12.11.2008
(73) Patentinhaber: Homag Holzbearbeitungssysteme AG, 72296 Schopfloch (DE)
(72) Erfinder: Sturm, Gotthilf, 72293 Glatten (DE); Kimmig, Clemens, 77728 Oppenau (DE); Gauß, Achim, 72280 Dornstetten/Hallwangen (DE)
(74) Vertreter: HOFFMANN EITLE

(56) Entgegenhaltungen:
- CH-A- 422 296
- DE-A1- 4 413 328
- DE-A1- 10 318 875
- DE-U1- 29 509 577
- US-A- 3 889 343

## Beschreibung

Die Erfindung betrifft eine Vorrichtung und ein Verfahren zum Einbringen eines Befestigungselements in eine Bohrung in einem Werkstück, insbesondere in eine Leichtbauplatte.

### Technisches Gebiet

Leichtbauplatten, so wie sie üblicherweise im Bereich der Möbelherstellung oder im Bereich der Türherstellung verwendet werden, bestehen üblicherweise hauptsächlich aus zwei parallel zueinander angeordneten relativ dünnen Decken, welche über Abstandselemente miteinander verbunden sind. Der so zwischen den beiden Decken entstehende Zwischenraum ist üblicherweise mit einem Füllmaterial ausgefüllt, das häufig Wellpappe oder ein anderes Kartonmaterial ist. Üblicherweise haben die so ausgebildeten Leichtbauplatten eine Stärke von 20 bis 100 mm wobei die jeweiligen Decken nur eine Stärke von jeweils 2 bis 10 mm aufweisen.

Um an den Leichtbauplatten weitere Bauelemente anbringen zu können, beispielsweise Griffe oder andere Beschläge, oder um zwei Platten miteinander verbinden zu können, ist es daher notwendig, Befestigungselemente in die jeweiligen Leichtbauplatten einzubringen, wobei die Befestigungselemente sowohl in der oberen als auch in der unteren Decke befestigt werden und so den Zwischenraum überbrücken. Die Befestigungselemente dienen dabei im Prinzip als Dübel, an denen die Griffe oder Beschläge befestigt werden können.

In der Praxis ist es hierbei häufig erforderlich, dass große Mengen an Befestigungselementen in Bohrungen von Werkstücken, insbesondere von Leichtbauplatten, eingebracht werden müssen. Beispielsweise müssen in der Möbelindustrie die Bohrungen von Möbelfronten, Korpusteilen, Paneelen oder der gleichen häufig ab Werk mit solchen Befestigungselementen versehen werden.

### Stand der Technik

Aus der DE 295 09 577 U1 ist ein Schrauber mit einem federbelasteten, spreizbaren Mundstück bekannt. Der Schrauber weist Klemmbacken auf, welche federvorgespannt sind, und welche zum Eingreifen mit einer einzuführenden Schraube ausgebildet sind.

Aus der DE 44 13 328 A1 ist eine Drehmomentmesseinrichtung für stationäre Schrauber bekannt. Hierbei wird das Drehmoment beim Eindrehen einer Schraube in eine Schraubverbindung gemessen.

Weiterhin ist aus der DE 103 18 875 A1 ein Verfahren und eine Vorrichtung zum Einbringen von Dübeln in ein Werkstück bekannt. Bei den hier einzutreibenden Dübeln handelt es sich im Wesentlichen um Kunststoff- oder Holzdübel, die in dem Werkstück eingeklebt werden.

CH 422 296 betrifft eine Vorrichtung zum Bohren von Löchern und zum Eindrehen von einschraub- und einsteckbaren Beschlagteilen, wobei ein heb- und senkbarer Aufspanntisch für das Werkstück an einem Schwenkkopf zwei Spindeln angeordnet aufweist, von denen die eine als Motorachse und Bohrspindel ausgebildet ist und sich ständig dreht und über einen Zahnradtrieb die andere mit elektromagnetischer Kupplung und Bremse versehene Spindel zum Eindrehen der Beschlagteile antreibt und beide Spindeln in einem solchen Winkel zueinanderstehen, dass sie durch Verschwenken des Kopfes nacheinander an ein und der selben Stelle des Werkstücks zum Einsatz gebracht werden, wobei die jeweils nicht im Einsatz befindliche Spindel von dem Werkstück abgeschwenkt ist.

### Zusammenfassung

Entsprechend ist es eine Aufgabe der vorliegenden Erfindung, Befestigungselemente automatisch in Leichtbauplatten einzubringen.

Die Aufgabe wird gelöst durch eine Vorrichtung zum Einbringen eines Befestigungselements in eine Bohrung in einem Werkstück mit den Merkmalen des Anspruchs 1 sowie ein Verfahren zum Einbringen eines Befestigungselements in eine Bohrung in einem Werkstück mit den Merkmalen des Anspruchs 17, wobei das Befestigungselement eine Spreizhülse und eine die Spreizhülse spreizende Spreizschraube umfasst.

Entsprechend umfasst die Vorrichtung eine Aufnahmevorrichtung zum Halten des Befestigungselements, wobei die Aufnahmevorrichtung insbesondere bezüglich des Werkstücks positionierbar ist, und weiterhin eine Einbringeinheit zum Eintreiben des Befestigungselements in das Werkstück, wobei die Einbringeinheit ein mit der Spreizschraube in Eingriff bringbares Eingreifmittel, insbesondere eine Schrauberklinge, umfasst, welches zum Eintreiben des Befestigungselements in die Bohrung in der Z-Richtung verfahrbar ist und zum Verspreizen des Befestigungselements um eine Drehachse drehbar ist.

Die Vorrichtung ermöglicht so das Einsetzen eines solchen Befestigungselements dadurch, dass ein in der Aufnahmevorrichtung gehaltenes Befestigungselement, welches in der Z-Richtung in einer vorbestimmten Position über dem Werkstück positionierbar ist, durch die Einbringeinheit zuerst in der Z-Richtung in die Bohrung herein geschoben wird, und dann durch Drehung des Eingreifmittels zu verspreizen. Entsprechend ist das Eingreifmittel in der Z-Richtung verfahrbar und gleichzeitig oder danach um eine Drehachse drehbar, wobei die Drehachse typischer Weise mit der Längsachse des Eingreifmittels zusammenfällt. Dies ist insbesondere bei der Verwendung einer Schrauberklinge der Fall. Die Schrauberklinge kann insbesondere auch in der Form einer Torx-Klinge verwendet werden.

Bei der Form der Schrauberklinge ist es allerdings nur wichtig, dass die Schrauberklinge mit der Spreizschraube in Eingriff kommen kann und sowohl ein Schubmoment als auch ein Drehmoment auf die Spreizschraube übertragen kann.

Die Vorrichtung ist insbesondere zur Verwendung mit einem CNC-Bearbeitungszentrum als Aggregat eines solchen Verarbeitungszentrums geeignet und dient zum automatischen Einbringen von Befestigungselementen.

Um die Bestimmungen der Relativposition der Aufnahmevorrichtung bezüglich des Werkstücks zu ermöglichen ist an der Aufnahmevorrichtung bevorzugt ein Sensor vorgesehen. Weiterhin ist zum Bestimmen der Relativposition des Eingreifmittels bezüglich des Werkstückes bevorzugt ein Sensor an der Einbringeinheit vorgesehen, mit dem diese Funktion durchgeführt werden kann.

In einem bevorzugten Ausführungsbeispiel ist weiterhin ein Drehmomentsensor vorgesehen, mit dem das von dem Eingreifmittel auf die Spreizschraube übertragene Drehmoment bestimmt werden kann. Hierdurch kann über eine Drehmomentsteuerung das Ende des Einschraubvorgangs gesteuert werden.

Die Aufnahmevorrichtung weist bevorzugt zwei in ihre geschlossene Position vorgespannte Aufnahmebacken zur klemmenden Aufnahme des Befestigungselements derart auf, dass die Einbringeinheit das Befestigungselement dennoch in der Z-Richtung aus den Aufnahmebacken heraustreiben kann. Mit anderen Worten soll die Vorspannung derart bemessen sein, dass das Befestigungselement zwar so gehalten wird, dass es aus der Aufnahmevorrichtung auch beim Verfahren der Vorrichtung nicht heraus fällt, aber ein Heraustreiben des Befestigungselements aus der klemmenden Halterung möglich ist.

Um die Befestigungselemente einfach und effizient zuführen zu können, ist bevorzugt eine Zuführeinheit mit einer Übergabeeinheit zur Übergabe eines Befestigungselements an die Aufnahmevorrichtung vorgesehen. Die Übergabeeinheit weist dabei bevorzugt zwei in die geschlossene Position vorgespannte Übergabebacken zur Aufnahme des Befestigungselements auf. In einer bevorzugten Variante findet die Übergabe des Befestigungselements von den Übergabebacken an die Aufnahmebacken mittels einer mechanischen Zwangssteuerung, insbesondere einer Kulissenführung, statt.

Die Zuführeinheit kann mit Befestigungselementen über einen Schlauch und/oder einen Vibrationsförderer versorgt werden. Dabei kann zur Verwendung unterschiedlicher Größen und Längen von Befestigungselementen ein Weichensystem vorgesehen sein, mit dem diese unterschiedlichen Befestigungselemente zugeführt werden können.

In einer anderen Variante kann die Einbringeinheit jedoch auch über ein Linearmagazin oder ein Rollenmagazin mit Befestigungselementen versorgt werden.

Um zu verhindern, dass Bohrspäne an den Stellen verbleiben, an denen die Spreizhülse an dem Werkstück anliegt, ist vorteilhaft eine Blasvorrichtung zum Ausblasen der Bohrung vorgesehen. Insbesondere kann dabei in dem Eingreifmittel ein Kanal zum Führen von Blasluft in das Befestigungselement hinein vorgesehen sein. Das Befestigungselement, insbesondere die Spreizschraube, weist bevorzugt ebenfalls einen durchgängigen Kanal auf, so dass die Blasluft von dem Eingriffsmittel durch das Befestigungselement hindurch in die Bohrung eingebracht werden kann. Über einen Drehverteiler kann die Blasluftzufuhr in den Kanal des Eingreifmittels vorgenommen werden.

In einer bevorzugten Variante ist eine Steuervorrichtung vorgesehen, welche nach dem Erreichen einer vorbestimmten Relativposition der Aufnahmevorrichtung bezüglich der Werkstückoberfläche die Einbringeinheit zum Eintreiben des Befestigungselements um einen vorbestimmten Weg in die Z-Richtung vorschiebt.

Weiterhin sind in dem Verfahren gemäß Anspruch 17 zum Einbringen eines Befestigungselements die folgenden Schritte vorgesehen:
- Zuführen eines Befestigungselements in eine Aufnahmevorrichtung;
- In Eingriff bringen eines Eingreifmittels einer Einbringeinheit mit der Spreizschraube;
- Eintreiben des Befestigungselements in die Bohrung des Werkstücks mittels eines Verfahrens des Eingreifmittels in der Z-Richtung; und
- Drehen des Eingreifmittels um eine Drehachse um die Spreizschraube zum Verspreizen des Befestigungselements zu drehen.

Entsprechend ist es wesentlich, dass das Eingreifmittel mit der Spreizschraube, insbesondere formschlüssig, in Eingriff gebracht wird und das Befestigungselement dann in der Z-Richtung in das Werkstück bzw. in die Bohrung herein schiebt. Dann verspreizt das Eingreifmittel, das weiterhin in Eingriff mit der Spreizschraube steht, durch Drehung um seine Drehachse das Befestigungselement in der Bohrung des Werkstücks.

In einer weiteren bevorzugten Variante des Verfahrens wird die Zuführeinheit synchron zu der Einbringeinheit betrieben, so dass ein Befestigungselement in das Werkstück eingebracht wird und gleichzeitig ein weiteres Befestigungselement zum Zuführen zur Übergabeeinheit vorbereitet wird. Hierdurch lassen sich die Vorbereitungszeiten und Taktzeiten insbesondere beim Einbringen von mehreren Befestigungselementen optimieren.

### Kurze Beschreibung der Figuren

Die Erfindung wird im Folgenden detaillierter unter Bezugnahme auf die Zeichnungen beschrieben werden, in denen:
Figur 1 eine schematische perspektivische Schnittdarstellung einer Leichtbauplatte mit einzubringenden bzw. eingebrachten Befestigungselementen in unterschiedlichen Verfahrensstufen zeigt;
Figur 2 eine perspektivische Darstellung und eine Schnittdarstellung eines weiteren Befestigungselements zeigt;
Figur 3 eine schematische perspektivische Ansicht einer Vorrichtung bzw. eines Aggregats zum Einbringen eines Befestigungselements zeigt;
Figur 4 eine weitere perspektivische schematische Ansicht der Vorrichtung zum Einbringen eines Befestigungselements gemäß der Figur 3 zeigt;
Figur 5 eine weitere schematische perspektivische Ansicht der Vorrichtung der Figuren 3 und 4 zeigt;
Figur 6 eine Draufsicht von unten auf eine Zuführeinheit zeigt; und
Figur 7 eine perspektivische Seitenansicht der Zuführeinheit der Figur 6 zeigt.

### Detaillierte Beschreibung bevorzugter Ausführungsformen

In der folgenden Beschreibung der exemplarischen Ausführungsbeispiele werden für gleiche oder ähnliche Merkmale die gleichen Bezugszeichen verwendet und auf eine erneute Beschreibung der jeweiligen Merkmale wird im Allgemeinen verzichtet.

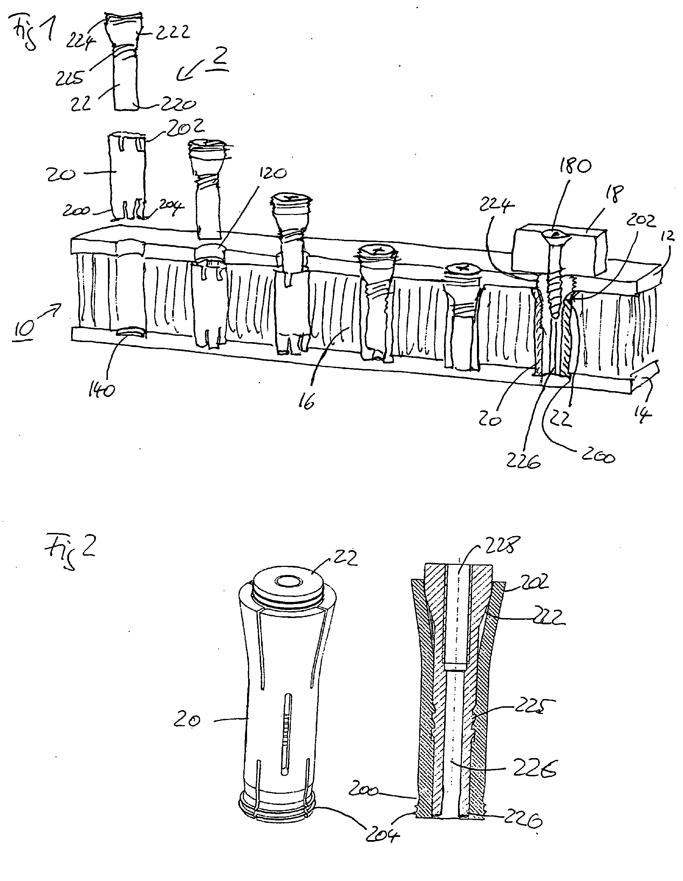

Figur 1 zeigt, stark schematisiert, eine Leichtbauplatte 10, die eine obere Decke 12, eine untere Decke 14 und eine in den Zwischenraum zwischen der oberen Decke 12 und der unteren Decke 14 angeordnete Fülllage 16 aufweist. Die Fülllage 16 ist im gezeigten Ausführungsbeispiel als Wellpappe bzw. Kartonlage gezeigt aber jegliches anderes geeignetes Material kann verwendet werden.

In die obere Decke 12 ist eine durchgehende Bohrung 120 eingebracht und in die untere Decke 14 ist eine Sacklochbohrung 140 eingebracht, in die gleichzeitig ein Befestigungselement eingebracht werden soll, wie nachfolgend beschrieben.

Ein Befestigungselement 2, das eine Spreizhülse 20 und eine Spreizschraube 22 umfasst, soll entsprechend an der Stelle der Bohrungen 120, 140 in die Leichtbauplatte 10 eingebracht werden. Wie schematisch in der Figur 1 zu erkennen ist, weist die Spreizschraube 22 einen unteren Spreizbereich 220 und einen oberen Spreizbereich 222, der im Wesentlichen als schiefe Ebene bzw. als Konus ausgebildet ist, auf.

Beim Einsetzen der Spreizschraube 22 in die Spreizhülse 20 wird ein unterer Spreizbereich 200 der Spreizhülse durch den unteren Spreizbereich 220 der Spreizschraube 22 aufgespreizt, und ein oberer Spreizbereich 202 der Spreizhülse 20 wird durch den oberen Spreizbereich 222 der Spreizschraube 22 aufgespreizt. Dies ist in der Figur 1 besonders gut bei dem ganz rechts in Schnittdarstellung dargestellten Befestigungselement zu erkennen. Insbesondere der obere Spreizbereich 202 der Spreizhülse 20 ist hier durch die Spreizschraube 22 derart aufgespreizt, dass er nahezu vollständig unter die obere Decke 12 greift.

Weiterhin ist der untere Spreizbereich 200 der Spreizhülse 20 in dem Sackloch 140 der unteren Decke 14 so verspreizt, dass er mit den in der Spreizhülse 20 vorhandenen Spreizzähnen 204 seitlich, also in radialer Richtung der Sacklochbohrung 140, in die untere Decke 14 eingreift.

Weiterhin weist die Spreizschraube 22 an ihrem Schraubenkopf ein Gewinde 224 auf, welches sich beim vollständigen Einschrauben in die Bohrung 120 der oberen Decke 12 einschraubt.

Entsprechend stehen, so wie das Befestigungselement in der ganz rechts gezeigten Schnittdarstellung in Figur 1 gezeigt ist, sowohl das obere Gewinde 224 der Spreizschraube 22, als auch der obere Spreizbereich 202 fest mit der oberen Decke 12, und der untere Spreizbereich 200 der Spreizhülse 20 fest mit der unteren Decke 14 in Eingriff.

Soll nun ein Griff oder ein anderer Beschlag an der Leichtbauplatte 10 befestigt werden, beispielsweise der ebenfalls ganz rechts in der Figur 1 schematisch dargestellte Türgriff 18, so kann in die Befestigungsschraube 22 eine weitere Schraube 180 eingedreht werden, mit der der Griff 18 befestigt wird. Hier wird der Dübelcharakter des Befestigungselements 2 klar.

In der Spreizschraube 22 ist ein zentraler, in der Längsachse der Spreizschraube 22 liegender, durchgehender Kanal 226 vorgesehen, der in seinem dem Schraubenkopf zugewendeten oberen Bereich eine Aufnahme für ein Eingreifmittel einer Einbringeinheit, insbesondere eine Aufnahme für eine Schrauberklinge, beispielsweise eines Torx-Schraubers, aufweist. Darüber hinaus ist noch ein hier nicht gezeigtes Gewinde vorgesehen, in das die Schraube 180 eingeschraubt werden kann.

Der durch die Spreizschraube 22 hindurch gehende Kanal 226 weist dabei drei Funktionen auf: Zum einen dient er, wie bereits genannt, als Aufnahme- bzw. Eingriffsmöglichkeit für eine Schrauberklinge, damit ein Schubmoment und ein Drehmoment auf die Spreizschraube 22 übertragen werden kann und diese eingeschoben und dann eingeschraubt werden kann. Weiterhin dient der Kanal 226 dazu, dass Blasluft durch die Spreizschraube 22 hindurchgeführt werden kann, um die Sacklochbohrung 140 in der unteren Decke 14 so anzublasen, dass eventuell vorhandene Späne schweben und sich nicht zwischen der Spreizhülse 20 und der unteren Decke 14 einlagern. Weiterhin dient der Kanal 226 zur Aufnahme der weiteren Schraube 180, mit der dann der eigentlich zu befestigende Beschlag, beispielsweise ein Griff 18, an der Leichtbauplatte 10 befestigt werden kann.

In der Figur 1 sind unterschiedliche Phasen des Einbringens des Befestigungselements 2 in die Leichtbauplatte 10 zu sehen. In der ganz links gezeigten Darstellung sind die Spreizhülse 20 und die Spreizschraube 22 als separate Teile gezeigt. Die Spreizhülse 20 und die Spreizschraube 22 werden jedoch üblicher Weise in einer vormontierten Variante zugeführt.

In der vierten Position in Figur 1 beginnt die Spreizschraube 22 den unteren Spreizbereich 200 und den oberen Spreizbereich 202 der Spreizhülse 20 aufzuspreizen. Dieser Aufspreizvorgang ist dann in den letzten beiden Positionen in Figur 1 abgeschlossen und das Befestigungselement 2 ist fest mit der Leichtbauplatte 10 verbunden. Insbesondere kann hier eine Zugbelastung auf die Spreizschraube 22 ausgeübt werden, so dass weitere Elemente an dem Befestigungselement 2 befestigt werden können.

Figur 2 zeigt noch einmal schematisch ein Befestigungselement in einer perspektivischen Ansicht und in einer Schnittdarstellung. Insbesondere ist hier der durchgehende Kanal 226 der Spreizschraube 22 zu sehen. In der Schnittdarstellung ist noch einmal genauer der obere Bereich 228 zu erkennen, der als Aufnahme für eine Schrauberklinge dient. Weiterhin ist in der Schnittdarstellung der Eingriff des Spreizgewindes 225 mit der Spreizhülse 20 gut zu erkennen.

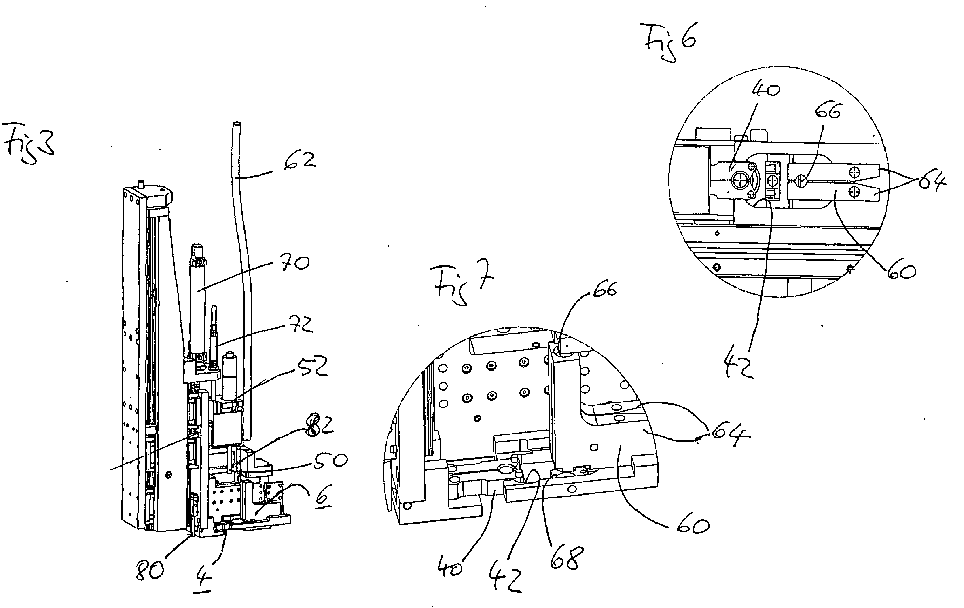

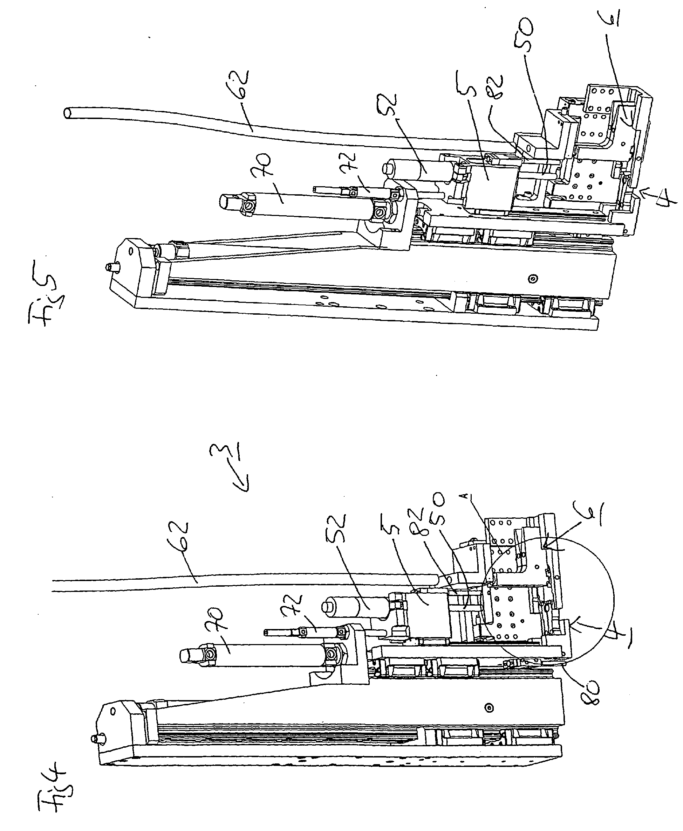

Die Figuren 3 bis 5 zeigen nun die Vorrichtung 3 bzw. das Aggregat zum Einbringen des vorgehend beschriebenen Befestigungselements 2 in eine Leichtbauplatte 10 in drei unterschiedlichen perspektivischen Darstellungen.

Die Vorrichtung 3 zum Einbringen des Befestigungselements ist so ausgebildet, dass sie in einem CNC-Bearbeitungszentrum als Aggregat eingesetzt werden kann. Die Vorrichtung 3 dient insbesondere zum automatischen Einbringen einer großen Zahl von Befestigungselementen.

Die Vorrichtung 3 umfasst insbesondere eine Aufnahmevorrichtung 4, in der ein Befestigungselement aufgenommen und gehalten werden kann. Die Funktionsweise der Aufnahmevorrichtung 4 wird nachfolgend unter Bezugnahme auf die Figuren 6 und 7 genauer erläutert werden.

Weiterhin ist eine Einbringeinheit 5 vorgesehen, mit der das Befestigungselement in die Leichtbauplatte eingebracht werden kann. Darüber hinaus ist eine Zuführeinheit 6 vorgesehen, mit der einzelne Befestigungselemente der Aufnahmevorrichtung 4 zugeführt werden können. Auch die Zuführeinheit 6 wird nachfolgend unter Bezugnahme auf die Figuren 6 und 7 genauer beschrieben werden.

In den Figuren 6 und 7 ist die Aufnahmevorrichtung 4 sowie eine Übergabeeinheit 60 der Zuführeinheit 6 detailliert in einer Ansicht von unten sowie in einer perspektivischen Detailansicht gezeigt.

Entsprechend weist die Aufnahmevorrichtung 4 zwei Aufnahmebacken 40 auf, die in eine geschlossene Position vorgespannt sind. Ein Befestigungselement wird den Aufnahmebacken 40 von der Übergabeeinheit 60 aus zugeführt. Das Befestigungselement wird dann in den Aufnahmebacken 40 der Aufnahmevorrichtung 4 klemmend so gehalten, dass das Befestigungselement nicht nach unten herausfallen kann, auch nicht bei Positionierungsvorgängen der Vorrichtung 3. Das Befestigungselement weist typischer Weise in der in der Aufnahmevorrichtung 4 gehaltenen Position sowohl die Spreizhülse als auch die Spreizschraube auf, die bereits in der Spreizhülse vormontiert ist. Die Aufnahmebacken 40 greifen das Befestigungselement dann im Bereich der Spreizhülse.

Um das Befestigungselement nun in ein Werkstück einzubringen, wird die Aufnahmevorrichtung 4 mittels des Lineartriebs 70, beispielsweise eines pneumatischen Zylinders, so lange in der Z-Richtung in Richtung des Werkstückes abgesenkt, bis ein Tastsensor 80 feststellt, dass sich die Aufnahmevorrichtung 4 in einer vorbestimmten Relativposition bezüglich des Werkstückes bzw. bezüglich der Oberfläche des Werkstückes befindet. Als vorbestimmter Abstand kann ein möglichst kleiner Abstand über dem Werkstück gewählt werden, z.B. 5mm.

Insbesondere wird dabei die Aufnahmevorrichtung 4, die sich vor dem Absenken ungefähr 100 mm über dem Werkstück befunden hat, in eine präzise, vordefinierte Position über der Werkstückoberfläche absenkt.

Sobald über den Tastsensor 80 festgestellt wurde, dass sich die Aufnahmevorrichtung 4 in einem vorbestimmten Abstand über dem Werkstück befindet, wird die Einbringeinheit 5 mittels des Lineartriebes 72 abgesenkt und das Eingreifmittel 50 der Einbringeinheit 5, welches in Form einer Schrauberklinge ausgebildet sein kann, wird in Eingriff, insbesondere in formschlüssigen Eingriff, mit der entsprechenden Aufnahme an der Spreizschraube gebracht.

Nach dem Eingreifen wird die Einbringeinheit 5 weiter in der Z-Richtung abgesenkt, so dass das Eingreifmittel 50 das Befestigungselement aus der klemmenden Aufnahme der Aufnahmebacken 40 heraus nach unten drückt und so das Befestigungselement in der Z-Richtung in die Bohrung des Werkstücks herein schiebt.

Da die Aufnahmevorrichtung in einer definierten Position gegenüber der Oberfläche des Werkstückes positioniert ist und das Befestigungselement gleichzeitig in einer definierten Position in der Aufnahmevorrichtung aufgenommen ist, kann das Eintreiben in die Bohrung dabei derart gestaltet werden, dass nach dem in Eingriff bringen des Eingreifmittels 50 mit der Aufnahme der Spreizschraube ein vorbestimmter Weg, beispielsweise 40 mm, in der Z-Richtung gefahren wird, so dass das Eingreifmittel 50 das Befestigungselement um einen genau definierten Weg in das Werkstück herein schiebt.

Sobald dieser vorgegebene Verfahrweg mit der Einbringeinheit 5 gefahren wurde und sich entsprechend das Befestigungselement, bzw. genauer dessen Spreizhülse, vollständig innerhalb des Werkstückes befindet, so wie es beispielsweise in der dritten Position in Figur 1 gezeigt ist, wird die aktive Verfahrbewegung der Einbringeinheit 5 in der Z-Richtung gestoppt und das Eingreifmittel 50 wird durch den Drehmotor 52 so gedreht, dass die Spreizschraube in die Spreizhülse hereingeschraubt wird. Die Einbringeinheit 5 bleibt dabei gegenüber dem Befestigungselement in der Z-Richtung vorgespannt, so dass die Einbringeinheit 5 zusammen mit dem Hereinschrauben der Spreizschraube in Z-Richtung wandert.

Ein Tastsensor 82, der mit der Oberfläche des Werkstücks in Kontakt kommt, bestimmt dann, ob die Spreizschraube durch die Einbringeinheit 5 tief genug eingeschraubt wurde. Da insbesondere die Aufnahmetiefe der Schraubklinge bzw. des Eingreifmittels 50 innerhalb der Spreizschraube bekannt ist, kann über den Tastsensor 82 beim Aufsetzen auf der Werkzeugoberfläche festgestellt werden, wie weit die Schraube in die bereits definiert in das Werkstück eingebrachte Spreizhülse hereingeschraubt wurde.

In einer nicht dargestellten Variante kann das Ende des Schraubvorgangs um die Drehachse des Eingreifmittels 50 auch mittels eines Drehmomentsensors bestimmt werden. Insbesondere kann durch das vorherige Festlegen eines bestimmten Maximaldrehmoments verhindert werden, dass die Spreizhülse durch die Spreizschraube an einer nicht beabsichtigten Stelle gesprengt wird.

In einer ebenfalls nicht dargestellten Variante der Erfindung kann mittels eines Sensors festgestellt werden, wie weit die Spreizhülse in das Werkstück eingeführt ist. Ein solcher Sensor kann beispielsweise ein Kraftsensor sein, der zwischen der Einbringeinheit 5 und dem Befestigungselement angeordnet ist, so dass der Kraftsensor durch ein schlagartiges Ansteigen der Einbringkraft in der Z-Richtung feststellt, wenn die Spreizhülse das untere Sackloch in der unteren Decke erreicht hat.

Unter Bezugnahme auf die Figuren 6 und 7 wird nun der Zuführvorgang eines Befestigungselements beschrieben werden. Die Befestigungselemente können beispielsweise über einen Schlauch 62 zu der Zuführeinheit 6 geliefert werden. Die Zuführeinheit 6 weist dabei eine Übergabeeinheit 60 auf, welche zwei Übergabebacken 64 aufweist, die in ihre geschlossene Position vorgespannt sind. Von den Übergabebacken 64 wird ein Übergabekanal 66 umschlossen, in den das Befestigungselement, beispielsweise aus dem Schlauch 62 heraus, herein fällt. Der Übergabekanal 66 hat solche Abmessungen, dass das Befestigungselement darin frei verschieblich gelagert ist. Insbesondere kann auch ein geringes Spiel des Befestigungselements im Übergabekanal 66 vorgesehen sein, so dass ein Befestigungselement in dem Übergabekanal 66 frei gleiten kann. Damit das Befestigungselement aus dem Übergabekanal 66 nicht nach unten heraus fällt, ist eine Begrenzungsplatte 68 unterhalb des Übergabekanals 66 vorgesehen, auf der das Befestigungselement dann, geführt durch die Übergabebacken 64, aufliegt. Entsprechend ist zwischen den Übergabebacken 64 und der Begrenzungsplatte 68 ein Freiraum, der im Wesentlichen jochförmig ausgebildet ist.

Die Übergabeeinheit 60, in der ein Befestigungselement in dem Übergabekanal 66 aufgenommen und bis zur Begrenzungsplatte 68 heruntergerutscht ist, wird dann in Richtung auf die Aufnahmevorrichtung 4 zu bewegt. Die Aufnahmebacken 40 öffnen sich dann aufgrund des Einschiebens des Befestigungselements im Bereich der jochförmigen Aufnahme.

Weiterhin ist eine Kulissenführung vorgesehen, die hier allgemein als 42 gezeigt wird, welche als eine mechanische Zwangssteuerung zur Übergabe eines Befestigungselements aus der Übergabeeinheit 60 an die Aufnahmevorrichtung 4 dient.

In der Aufnahmevorrichtung wird das Befestigungselement dann durch die Aufnahmebacken 40 klemmend gehalten, so dass es nicht nach unten in Z-Richtung abrutschen kann.

Die Übergabeeinheit 60 fährt dann wieder zurück und ist dazu bereit, ein neues Befestigungselement aufzunehmen. Entsprechend ist es möglich, während ein Befestigungselement gerade in ein Werkstück eingetrieben wird, gleichzeitig ein neues Befestigungselement in der Übergabeeinheit 60 aufzunehmen und entsprechend auszurichten, so dass ein synchroner und paralleler Betrieb möglich wird. Mit anderen Worten kann der Vorrichtung ein Befestigungselement zugeführt werden, während gleichzeitig ein weiteres Befestigungselement in das Werkstück eingebracht wird.

Unterschiedlich lange Befestigungselemente können mit der gezeigten Vorrichtung verarbeitet werden. Insbesondere ist es nur notwendig, dass die zu verarbeitenden Befestigungselemente nicht länger sind als der Abstand zwischen der Begrenzungsplatte 68 und der oberen Begrenzung oberhalb der Übergabeeinheit 60.

Insbesondere wenn eine Kraftsteuerung oder eine andere Sensorsteuerung der Einbringeinheit bzw. des Eingreifmittels relativ zum Befestigungselement und relativ zum Werkstück verwendet wird, können unterschiedlich lange Befestigungselemente verwendet werden, da sich die Einbringeinheit dann automatisch auf die jeweiligen Längen der Befestigungselemente einstellen kann. Es ist selbstverständlich auch möglich, dass die Dimensionen der Befestigungselemente in die Steuerung des Aggregats eingegeben werden.

Die Zuführung der Befestigungselemente zu der Zuführeinheit bzw. der Übergabeeinheit 60 kann durch den bereits genannten Schlauch 62 erfolgen, der von einem Vibrationsförderer versorgt wird. Sollen unterschiedliche Längen von Befestigungselementen verwendet werden, so können diese unterschiedlichen Längen über ein Weichensystem der Zuführeinheit 6 zugeführt werden.

In einer nicht gezeigten Variante ist es jedoch auch möglich, dass die Befestigungselemente der Einbringeinheit 5 über ein Linearmagazin zur Verfügung gestellt werden.

Ein weiteres vorteilhaftes Merkmal der Vorrichtung 3 ist es, dass durch das Eingreifmittel, also beispielsweise die Schrauberklinge hindurch, Blasluft ausgegeben werden kann, die dann durch einen Kanal in der Spreizschraube hindurch in das Werkstück eingebracht werden kann. Durch die Blasluft ist es möglich, eventuell im Bereich des Bohrung befindliche Späne aus der Bohrung heraus zu blasen und dafür zu sorgen, dass die Späne schweben, während das Befestigungselement in das Werkstück eingebracht wird.

Um die Blasluft in das Eingreifmittel 50, insbesondere eine axiale Bohrung in dem Eingreifmittel 50, hereinzubringen, kann ein in den Zeichnungen nicht gezeigter Drehverteiler am Werkzeug realisiert werden.

Entsprechend gestaltet sich das Verfahren zum Einbringen, insbesondere zum automatischen Einbringen, eines Befestigungselements in ein Werkstück folgendermaßen:
Das mit einer entsprechenden Bohrung versehene Werkstück wird unter dem Aggregat bzw. unter der Vorrichtung 3 platziert, bzw. die Vorrichtung wird über dem Bohrloch platziert. Ein Befestigungselement wird der Zuführeinheit 6 beispielsweise über den Schlauch 62 zugeführt. In der Zuführeinheit 6 rutscht das Befestigungselement in den Übergabekanal 66 der Übergabeeinheit 60. Die Übergabeeinheit 60 bewegt sich auf die Aufnahmevorrichtung 4 zu, wobei eine mechanische Zwangssteuerung, insbesondere eine Kulissensteuerung, dafür sorgt, dass das in dem Übergabekanal 66 aufgenommene Befestigungselement an die Aufnahmevorrichtung 4, insbesondere die Aufnahmebacken 40 übergeben wird, so dass das Befestigungselement durch die Aufnahmebacken 40 klemmend gehalten wird.

Dann wird die Vorrichtung 3 und insbesondere die Aufnahmevorrichtung 4 mittels eines Hubzylinders 70 soweit gegenüber dem Werkstück abgesenkt, bis eine vorbestimmte Relativposition der Aufnahmevorrichtung 4 bezüglich der Werkstückoberfläche durch den Sensor 80 angezeigt wird. Die Einbringeinheit 5 und insbesondere das Eingreifmittel 50, welches insbesondere eine Schrauberklinge ist, wird in Eingriff mit der dafür vorgesehenen Aufnahme in der Spreizschraube gebracht. Dann wird die Einbringeinheit 5 in der Z-Richtung so verfahren, bis die Spreizhülse in dem Werkstück eingebracht ist. Dies kann entweder über eine Feedback-Steuerung mit einem Sensor oder über die Vorgabe eines festen Verfahrweges geschehen. Wenn die Einbringeinheit 5 das Befestigungselement um diesen vorbestimmten Weg in das Werkstück eingetrieben hat, wird die Bewegung in der Z-Richtung beendet und es verbleibt lediglich eine Vorspannung in der Z-Richtung, so dass das Eingreifmittel stets in festem Eingriff mit der Spreizschraube verbleibt.

Während des Verfahrens der Einbringeinheit 5 in der Z-Richtung zum Einschieben des Befestigungselements und insbesondere der Spreizhülse in das Werkstück, wird durch das Eingreifmittel, insbesondere die Schrauberklinge, hindurch Blasluft zugeführt, die am untersten Ende des Befestigungselements austritt und welche dazu dient, dass die Späne, die sich in dem Werkstück befinden, zumindest im Bereich der Sacklochbohrung der unteren Decke schweben.

Wenn das Verfahren der Einbringeinheit 5 bzw. des Befestigungselements in der Z-Richtung beendet ist, wird das Eingreifmittel um eine Drehachse, insbesondere um dessen Längsachse, mittels des Motors 52 gedreht, um die Spreizschraube in die Spreizhülse hereinzuschrauben. Dieser Schraubvorgang wird so lange ausgeführt, bis der Sensor 82 angibt, dass die Spreizschraube hinreichend tief eingeschraubt ist. Der Schraubvorgang kann auch durch das Überschreiten eines vorgegebenen Drehmomentniveaus oder einer Kombination der beiden Verfahren beendet werden.

Nach dem Einschieben in Z-Richtung und dem Drehen um die Drehachse wird die Einbringeinheit 5, das Eingreifmittel 50 und das Aggregat 3 wieder in der Z-Richtung in der entgegengesetzten Richtung außer Eingriff mit der Spreizschraube und dem Werkstück gebracht und das Befestigungselement ist in dem Werkstück eingebracht.

Wesentlich bei dem Verfahren und der Vorrichtung ist es, dass mit dem gleichen Werkzeug, nämlich dem Eingreifmittel 50 (Schrauberklinge), das Befestigungselement in einem ersten Schritt linear in der Z-Richtung in das Werkstück eingeschoben wird und dann in einem zweiten Schritt um die Drehachse gedreht wird.

## Patentansprüche

1. Vorrichtung (3) zum Einbringen eines Befestigungselementes (2) in eine Bohrung (120, 140) in einem Werkstück (10), insbesondere eine Leichtbauplatte, wobei das Befestigungselement eine Spreizhülse (20) und eine die Spreizhülse spreizende Spreizschraube (22) umfasst, wobei die Vorrichtung umfasst:
- eine Aufnahmevorrichtung (4) zum Halten des Befestigungselements, wobei die Aufnahmevorrichtung relativ zum Werkstück positionierbar ist,
- eine Einbringeinheit (5) zum Heraustreiben des Befestigungselements aus der Aufnahmevorrichtung und zum Eintreiben des Befestigungselements in das Werkstück, wobei die Einbringeinheit ein mit der Spreizschraube in Eingriff bringbares Eingreifmittel (50), insbesondere eine Schrauberklinge, umfasst, das zum Eintreiben des Befestigungselements in die Bohrung in der Z-Richtung verfahrbar ist und zum Verspreizen des Befestigungselements um eine Drehachse drehbar ist.

2. Vorrichtung gemäß Anspruch 1, wobei die Aufnahmevorrichtung einen Sensor (80) zur Bestimmung der Relativposition der Aufnahmevorrichtung bezüglich des Werkstücks umfasst.

3. Vorrichtung gemäß Anspruch 1 oder 2, wobei die Einbringeinheit einen Sensor (82) zur Bestimmung der Relativposition des Eingreifmittels bezüglich des Werkstücks umfasst.

4. Vorrichtung gemäß einem der vorstehenden Ansprüche, wobei ein Drehmomentsensor das Drehmoment des Eingreifmittels bestimmt.

5. Vorrichtung gemäß einem der vorstehenden Ansprüche, wobei die Aufnahmevorrichtung zwei in die geschlossene Position vorgespannte Aufnahmebacken (40) zur klemmenden Aufnahme des Befestigungselements derart aufweist, dass die Einbringeinheit das Befestigungselement in der Z-Richtung aus den Aufnahmebacken heraus treiben kann.

6. Vorrichtung gemäß einem der vorstehenden Ansprüche, wobei eine Zuführeinheit (6) zum Zuführen von Befestigungselementen vorgesehen ist, wobei die Zuführeinheit eine Übergabeeinheit (60) zur Übergabe eines Befestigungselements an die Aufnahmevorrichtung umfasst.

7. Vorrichtung gemäß Anspruch 6, wobei die Übergabeeinheit zwei in die geschlossene Position vorgespannte Übergabebacken (64) zur Aufnahme des Befestigungselements aufweist, und die Aufnahmevorrichtung zwei in die geschlossene Position vorgespannte Aufnahmebacken zur klemmenden Aufnahme eines Befestigungselements aufweist.

8. Vorrichtung gemäß Anspruch 7, wobei die Übergabe des Befestigungselements von den Übergabebacken an die Aufnahmebacken mittels einer mechanischen Zwangssteuerung (42), insbesondere einer Kulissenführung, durchgeführt wird.

9. Vorrichtung gemäß einem der Ansprüche 6 bis 8, wobei die Zuführeinheit über einen Vibrationsförderer und/oder einen Schlauch (62) mit Befestigungselementen versorgt wird.

10. Vorrichtung gemäß Anspruch 9, wobei zur Versorgung mit Befestigungselementen unterschiedlicher Abmessungen ein Weichensystem vorgesehen ist.

11. Vorrichtung gemäß einem der vorstehenden Ansprüche, wobei die Einbringeinheit über ein Linearmagazin oder ein Rollenmagazin mit Befestigungselementen versorgt wird.

12. Vorrichtung gemäß einem der vorstehenden Ansprüche, wobei eine Blasvorrichtung zum Ausblasen der Bohrung vorgesehen ist.

13. Vorrichtung gemäß Anspruch 12, wobei in dem Eingreifmittel ein Kanal zum Durchführen der Blasluft in das Befestigungselement hinein und durch dieses hindurch vorgesehen ist.

14. Vorrichtung gemäß Anspruch 13, wobei die Blasluftzufuhr über einen Drehverteiler in den Kanal des Eingreifmittels vorgenommen wird.

15. Vorrichtung gemäß einem der vorstehenden Ansprüche, wobei eine Steuervorrichtung vorgesehen ist, welche nach der dem Erreichen einer vorbestimmten Relativposition der Aufnahmevorrichtung bezüglich der Werkstückoberfläche die Einbringeinheit zum Eintreiben des Befestigungselements um einen vorbestimmten Weg in die Z-Richtung vorschiebt.

16. Vorrichtung gemäß Anspruch 15, wobei die Steuervorrichtung nach dem Vorschieben um den vorbestimmten Weg die Drehung des Eingreifmittels auslöst.

17. Verfahren zum Einbringen eines Befestigungselements (2) in eine Bohrung (120, 140) in einem Werkstück (10), insbesondere eine Leichtbauplatte, wobei das Befestigungselement eine Spreizhülse (20) und eine die Spreizhülse spreizende Spreizschraube (22) umfasst, mit den folgenden Schritten:
- Bereitstellen eines Befestigungselements in einer Aufnahmevorrichtung (4);
- in Eingriff bringen eines Eingreifmittels (50), insbesondere einer Schrauberklinge, einer Einbringeinheit (5) mit der Spreizschraube;
- Einführen des Befestigungselements in die Bohrung mittels Verfahrens des Eingreifmittels in der Z-Richtung; und
- Drehen des Eingreifmittels um eine Drehachse zum Verspreizen des Befestigungselements.

18. Verfahren gemäß Anspruch 17, wobei die Aufnahmevorrichtung mittels eines Sensors (80) in eine vorbestimmte Relativposition bezüglich des Werkstücks gebracht wird, bevor das Befestigungselement in die Bohrung hereingetrieben wird.

19. Verfahren gemäß Anspruch 17 oder 18, wobei das Befestigungselement durch die Einbringeinheit in das Werkstück in der Z-Richtung eingetrieben wird, bis es eine vorbestimmte Position in der Z-Richtung erreicht hat.

20. Verfahren gemäß Anspruch 19, wobei die vorbestimmte Position mittels eines Sensors bestimmt wird.

21. Verfahren gemäß Anspruch 19, wobei die vorbestimmte Position mittels eines fest vorgegebenen Weges erreicht wird.

22. Verfahren gemäß einem der Ansprüche 19 bis 21, wobei die Einbringeinheit nach Erreichen der vorbestimmten Position in Z-Richtung die Spreizschraube dreht, bis ein vorgegebenes maximales Drehmoment überschritten ist oder bis ein Sensor (82) eine vorbestimmte Position in der Z-Richtung ermittelt hat.

23. Verfahren gemäß einem der Ansprüche 17 bis 22, wobei ein Befestigungselement mittels einer Zuführeinheit (6) an die Aufnahmevorrichtung übergeben wird.

24. Verfahren gemäß Anspruch 23, wobei die Zuführeinheit eine Übergabeeinheit (60) aufweist, die zur Übergabe des Befestigungselements auf die Aufnahmevorrichtung zu bewegt wird und die Übergabe mittels einer mechanischen Zwangssteuerung (42) geführt wird. '

25. Verfahren gemäß Anspruch 23 oder 24, wobei die Zuführeinheit synchron zu der Einbringeinheit betrieben wird, so dass ein Befestigungselement in das Werkstück eingebracht wird und gleichzeitig ein weiteres Befestigungselement zum Zuführen zur Übergabeeinheit vorbereitet wird.

26. Verfahren gemäß einem der Ansprüche 17 bis 25, wobei beim Einführen des Befestigungselements in das Werkstück in der Z-Richtung Blasluft zum Ausblasen der Bohrung durch Eingreifmittel in das Befestigungselement und durch dieses hindurch geführt wird.

## Claims

1. Device (3) for introducing an attachment element (2) into a bore (120, 140) of a workpiece (10), in particular a lightweight building panel, wherein the attachment element comprises a spreading sleeve (20) and a spreading screw (22) which spreads the spreading sleeve, wherein the device comprises:
- a receiving device (4) for holding the attachment element, wherein the receiving device can be positioned relative to the workpiece,
- an introduction unit (5) for driving out the attachment element from the receiving device and for driving the attachment element into the workpiece, wherein the introduction unit comprises an engagement means (50), in particular a screw blade, which can be engaged with the spreading screw and which can be moved into the bore in the Z direction for driving in the attachment element and can be rotated about an axis of rotation to spread the attachment element.

2. Device according to claim 1, wherein the receiving device comprises a sensor (80) for determining the relative position of the receiving device with respect to the workpiece.

3. Device according to claim 1 or 2, wherein the introduction unit comprises a sensor (82) for determining the relative position of the engagement means with respect to the workpiece.

4. Device according to one of the preceding claims, wherein a torque sensor determines the torque of the engagement means.

5. Device according to one of the preceding claims, wherein the receiving device has two receiving jaws (40) pretensioned into the closed position for clamp-like receiving of the attachment element such that the introduction unit may drive the attachment element out of the receiving jaws in the Z direction.

6. Device according to one of the preceding claims, wherein a supply unit (6) is provided for supplying attachment elements, wherein the supply unit comprises a transfer unit (60) for transfer of an attachment element to the receiving device.

7. Device according to claim 6, wherein the transfer unit has two transfer jaws (64) pretensioned into the closed position for receiving the attachment element, and the receiving device has two receiving jaws pretensioned into the closed position for clamp-like receiving of an attachment element.

8. Device according to claim 7, wherein the transfer of the attachment element from the transfer jaws to the receiving jaws is carried out by means of mechanical forced control (42), in particular a connecting link guide.

9. Device according to one of claims 6 to 8, wherein the supply unit is provided with attachment elements via a vibration conveyer and/or a tube (62).

10. Device according to claim 9, wherein a switching system is provided for provision with attachment elements of different dimensions.

11. Device according to one of the preceding claims, wherein the introduction unit is provided with attachment elements via a linear magazine or a roller magazine.

12. Device according to one of the preceding claims, wherein a fan device is provided for blowing out the bore.

13. Device according to claim 12, wherein a channel for passing through blow air into the attachment element and through the latter is provided in the engagement means.

14. Device according to claim 13, wherein the blow air supply is effected via a rotary distributor into the channel of the engagement means.

15. Device according to one of the preceding claims, wherein a control device is provided which, after reaching a predetermined relative position of the receiving device with respect to the workpiece surface, advances the introduction unit by a predetermined path in the Z direction to drive in the attachment element.

16. Device according to claim 15, wherein the control device triggers the rotation of the engagement means after advance by the predetermined path.

17. Process for introducing an attachment element (2) into a bore (120, 140) in a workpiece (10), in particular a lightweight building panel, wherein the attachment element comprises a spreading sleeve (20) and a spreading screw (22) which spreads the spreading sleeve, having the following steps:
- provision of an attachment element in a receiving device (4);
- engagement of an engagement means (50), in particular a screw blade, of an introduction unit (5) with the spreading screw;
- introduction of the attachment element into the bore by means of moving the engagement means in the Z direction; and
- rotating the engagement means about an axis of rotation to spread the attachment element.

18. Process according to claim 17, wherein the receiving device is brought to a predetermined relative position with respect to the workpiece by means of a sensor (80) before the attachment element is driven into the bore.

19. Process according to claim 17 or 18, wherein the attachment element is driven into the workpiece in the Z direction by the introduction unit until it has reached a predetermined position in the Z direction.

20. Process according to claim 19, wherein the predetermined position is determined by means of a sensor.

21. Process according to claim 19, wherein the predetermined position is reached by means of a firmly preset path.

22. Process according to one of claims 19 to 21, wherein the introduction unit rotates the spreading screw after reaching the predetermined position in Z direction until a preset maximum torque is exceeded or until a sensor (82) has determined a predetermined position in the Z direction.

23. Process according to one of claims 17 to 22, wherein an attachment element is transferred to the receiving device by means of a supply unit (6).

24. Process according to claim 23, wherein the supply unit has a transfer unit (60) which is moved towards the receiving device for transfer of the attachment element and the transfer is guided by means of mechanical forced control (42).

25. Process according to claim 23 or 24, wherein the supply unit is operated synchronously to the introduction unit so that an attachment element is introduced into the workpiece and at the same time a further attachment element is prepared for supply to the transfer unit.

26. Process according to one of claims 17 to 25, wherein when introducing the attachment element into the workpiece in the Z direction, blow air for blowing out the bore is guided by engagement means into the attachment element and through the latter.

## Revendications

1. Dispositif (3) destiné à l'introduction d'un élément de fixation (2) dans un perçage (120, 140) dans une pièce d'oeuvre (10), en particulier un panneau allégé, l'élément de fixation comprenant une cheville expansible (20) et une vis d'écartement (22) écartant la cheville expansible, le dispositif comprenant :
- un dispositif de réception (4), pour maintenir l'élément de fixation, le dispositif de réception étant susceptible d'être positionné par rapport à la pièce d'oeuvre,
- une unité d'introduction (5), pour expulser l'élément de fixation hors du dispositif de réception et pour introduire l'élément de fixation dans la pièce d'oeuvre, l'unité d'introduction comprenant un moyen de mise en prise (50), susceptible d'être mis en prise avec la vis d'écartement, en particulier une lame de visseur, déplaçable dans la direction Z dans le perçage, pour assurer l'introduction de l'élément de fixation et susceptible de tourner autour d'un axe de rotation, pour assurer l'écartement de l'élément de fixation.

2. Dispositif selon la revendication 1, dans lequel le dispositif de réception comprend un capteur (80) pour déterminer la position relative du dispositif de réception par rapport à la pièce d'oeuvre.

3. Dispositif selon la revendication 1 ou 2, dans lequel
l'unité d'introduction comprend un capteur (80) pour déterminer la position relative du moyen de mise en prise par rapport à la pièce d'oeuvre.

4. Dispositif selon l'une des revendications précédentes, dans lequel un capteur de couple de rotation détermine le couple de rotation du moyen de mise en prise.

5. Dispositif selon l'une des revendications précédentes, dans lequel le dispositif de réception présente deux mâchoires de réception (40), précontraintes à la position fermée, pour recevoir, avec effet de serrage, l'élément de fixation, de manière que l'unité d'introduction puisse expulser l'élément de fixation hors des mâchoires de réception, dans la direction Z.

6. Dispositif selon l'une des revendications précédentes, dans lequel une unité d'alimentation (6) est prévue pour fournir des éléments de fixation, l'unité d'alimentation comprenant une unité de transfert (60), pour transférer un élément de fixation au dispositif de réception.

7. Dispositif selon la revendication 6, dans lequel l'unité de transfert présente deux mâchoires de transfert (64), précontraintes à la position fermée, pour recevoir l'élément de fixation, et le dispositif de réception présente deux mâchoires de réception, précontraintes à la position fermée, pour recevoir, avec effet de serrage, un élément de fixation.

8. Dispositif selon la revendication 7, dans lequel le transfert de l'élément de fixation est effectué par les mâchoires de transfert aux mâchoires de réception, au moyen d'une commande forcée (42) de nature mécanique, en particulier d'un guidage à coulisse.

9. Dispositif selon l'une des revendications 6 à 8, dans lequel l'unité d'alimentation est alimentée en éléments de fixation par l'intermédiaire d'un transporteur à vibrations et/ou d'un tuyau souple (62).

10. Dispositif selon la revendication 9, dans lequel un système d'aiguillage est prévu pour assurer une alimentation avec des éléments de fixation de différentes dimensions.

11. Dispositif selon l'une des revendications précédentes, dans lequel l'unité d'introduction est alimentée en éléments de fixation par l'intermédiaire d'un magasin linaire, ou d'un magasin à rouleaux.

12. Dispositif selon l'une des revendications précédentes, dans lequel un dispositif de soufflage est prévu, pour assurer le soufflage du perçage.

13. Dispositif selon la revendication 12, dans lequel un canal pour le passage de l'air de soufflage dans l'élément de fixation et à travers celui-ci est prévu dans le moyen de mise en prise.

14. Dispositif selon la revendication 13, dans lequel l'alimentation en air de soufflage est effectuée par l'intermédiaire d'un distributeur rotatif dans le canal du moyen de mise en prise.

15. Dispositif selon l'une des revendications précédentes, dans lequel un dispositif de commande est prévu, faisant avancer dans la direction Z, d'une distance prédéterminée, l'unité d'introduction pour introduire l'élément de fixation, après atteinte d'une position relative prédéterminée du dispositif de réception par rapport à la surface de pièce d'oeuvre.

16. Dispositif selon la revendication 15, dans lequel le dispositif de commande déclenche la rotation du moyen de mise en prise, après accomplissement d'un avancement, de la distance prédéterminée.

17. Procédé destiné à l'introduction d'un élément de fixation (2) dans un perçage (120, 140) dans une pièce d'oeuvre (10), en particulier un panneau allégé, l'élément de fixation comprenant une cheville expansible (20) et une vis d'écartement (22) écartant la cheville expansible, comprenant les étapes suivantes :
- fourniture d'un élément de fixation dans un dispositif de réception (4) ;
- mise en prise d'un moyen de mise en prise (50), en particulier une lame de visseur, d'une unité d'introduction (5) avec la vis d'écartement:
- introduction de l'élément de fixation dans le perçage, par déplacement du moyen de mise en prise dans la direction Z ; et
- rotation du moyen de mise en prise autour d'un axe de rotation, pour assurer l'écartement de l'élément de fixation.

18. Procédé selon la revendication 17, dans lequel le dispositif de réception est placé, au moyen d'un capteur (80), dans une position relative prédéterminée par rapport à la pièce d'oeuvre, avant que l'élément de fixation soit enfoncé dans le perçage.

19. Procédé selon la revendication 17 ou 18, dans lequel l'élément de fixation est enfoncé dans la pièce d'oeuvre, dans la direction Z, au moyen de l'unité d'introduction, jusqu'à ce qu'il atteigne une position prédéterminée dans la direction Z.

20. Procédé selon la revendication 19, dans lequel la position prédéterminée est déterminée au moyen d'un capteur.

21. Procédé selon la revendication 19, dans lequel la position prédéterminée est atteinte au moyen d'une course de déplacement prédéterminée de façon fixe.

22. Procédé selon l'une des revendications 19 à 21, dans lequel l'unité d'introduction, après atteinte de la position prédéterminée dans la direction Z, fait tourner la vis d'écartement, jusqu'à ce qu'un couple de rotation maximal prédéterminé soit dépassé, ou jusqu'à ce qu'un capteur (82) ait déterminé une position prédéterminée dans la direction Z.

23. Procédé selon l'une des revendications 17 à 22, dans lequel un élément de fixation est transféré au dispositif de réception, au moyen d'une unité d'alimentation (6).

24. Procédé selon la revendication 23, dans lequel l'unité d'alimentation présente une unité de transfert (60), déplacée pour assurer le transfert de l'élément de fixation sur le dispositif de réception, et le transfert est guidé au moyen d'une commande forcée (42) de nature mécanique.

25. Procédé selon la revendication 23 ou 24, dans lequel l'unité d'alimentation est actionnée de manière synchrone par rapport à l'unité d'introduction, de manière qu'un élément de fixation soit introduit dans la pièce d'oeuvré et, simultanément, un autre élément de fixation est préparé, pour amenée à l'unité de transfert.

26. Procédé selon l'une des revendications 17 à 25, dans lequel, lors de l'introduction de l'élément de fixation dans la pièce d'oeuvre, dans la direction Z, de l'air de soufflage, destiné à souffler le perçage, est guidé à travers le moyen de mise en prise, dans l'élément de fixation et à travers celui-ci.
